# EUROPEAN PATENT SPECIFICATION

(11) **EP 4 539 133 B1**
(45) Date of publication and mention of the grant of the patent: **27.05.2026**
(21) Application number: 24196062.4
(22) Date of filing: 23.08.2024
(51) Int. Cl.: H01M 4/04, H01M 4/38, H01M 4/40, H01M 4/66, H01M 4/80, H01M 10/0525, H01M 10/052, H01M 4/02

(54) **SELF-SUPPORTED HYPERLITHIATED POROUS FLEXIBLE 3D HOST ANODE FOR LITHIUM METAL SECONDARY BATTERIES**
SELBSTTRAGENDE HYPERLITHIIERTE PORÖSE FLEXIBLE 3D-HOSTANODE FÜR LITHIUM-METALL-SEKUNDÄRBATTERIEN
ANODE HÔTE 3D FLEXIBLE, POREUSE, HYPERLITHIÉE, AUTO-SUPPORTÉE POUR BATTERIES SECONDAIRES AU LITHIUM-MÉTAL

(30) Priority: 11.10.2023 LU 103202
(43) Date of publication of application: 16.04.2025
(73) Proprietor: Theion GmbH, 12487 Berlin (DE)
(72) Inventor: Waidha, Aamir Iqbal, 12487 Berlin (DE); Slavik, Marek, 12487 Berlin (DE)
(74) Representative: Tegethoff, Sebastian

(56) References cited:
- WO-A1-2021/189083
- US-A1- 2017 352 868
- US-A1- 2020 274 155
- CHEN YUE ET AL: "Advances in the use of carbonaceous scaffolds for constructing stable composite Li metal anodes", NEW CARBON MATERIALS, ELSEVIER, AMSTERDAM, NL, vol. 38, no. 4, 1 August 2023 (2023-08-01), pages 698 - 718, XP087396814, ISSN: 1872-5805, DOI: 10.1016/S1872-5805(23)60734-6
- YE YU ET AL: "Lithiophilic Li-Zn alloy modified 3D Cu foam for dendrite-free lithium metal anode", JOURNAL OF POWER SOURCES, ELSEVIER, AMSTERDAM, NL, vol. 472, 16 July 2020 (2020-07-16), XP086242704, ISSN: 0378-7753, [retrieved on 20200716], DOI: 10.1016/J.JPOWSOUR.2020.228520

## Description

The present invention is directed at a self-supported, porous, 3D, flexible host anode with lithiophilic constituents with dendritic morphology for lithium-metal secondary batteries, a method of preparing the same, and a secondary battery comprising the same, according to the independent patent claims.

There is a world-wide demand for high energy density energy storage devices, not only for mobile but also stationary storage application. In particular, the electromobility sector has increased the demand for mobile high energy density storage devices that can provide a 1000 km range of battery electric vehicle on a single charge. In addition, fast charging capable energy storage devices are highly sought after, where charging time of less than 30 minutes is desired in order to reach from 10% to 100% state of charge.

For mobile energy storage, lithium-ion batteries are the favourable choice due to their high cycle life and high voltage, depending on the anode and cathode potential. Within the state of art lithium-ion technology, intercalation-based graphite negative electrodes (anodes) are used, which not only offer a low theoretical specific capacity of 372 mAh/g but also a limited charging rate capability.

The low charging rate is due to the slow diffusion of lithium ions (Li⁺) upon charging, i.e. intercalation into the host anode graphite structure. In addition, a high polarization gradient developed within the electrolyte during charging not only restricts Li⁺ accessibility but also induces dendrite formation in such a graphite-based negative electrode due to the anode potential being driven below 0V, i.e. the lithium plating potential. This implies that lithium plating becomes more favourable than Li⁺ intercalation within such a host anode graphite structure.

In order to reach the goal of high energy density batteries, the ideal scenario would be to use lithium metal as anode and couple it with a high voltage cathode, for example LiNiPO₄. Li metal as the negative electrode not only offers an order of magnitude higher specific capacity (3860 mAh/g) as compared to graphite but also the lowest redox potential of -3.04 V versus a standard hydrogen electrode (SHE). Additionally, lithium metal offers lowest density of all alkali metals, i.e. o.534 g/cm³. In comparison, the state-of-the-art graphite anode has a working potential of 0.1 V versus the metal lithium anode and the density of 2.26 g/cm³.

Hence, as the negative electrode, a metal lithium anode emerges as the holy grail anode.

However, as a negative electrode, lithium metal suffers from several drawbacks like dendrite growth, non-uniform lithium plating and stripping, mossy lithium formation, infinite volume changes during charging and dead lithium formation, etc, which limits its application within the commercially available cells despite its obvious advantages.

Nevertheless, lithium as an anode is still the favourable candidate due its ability in enabling high energy density batteries. So far different approaches have been tried to address the aforementioned drawbacks of a lithium metal anode.

For example, Patent EP 3 852 171 A1 discloses a protective coating on a lithium metal anode which allows the current density to reach 1 mA/cm² with the areal capacity of 1 mAh/cm². However, the said current density is significantly lower to allow for even 1C charge of state-of-the-art cathode, where an areal capacity of 3.5 mAh/cm² or higher is used.

Similarly, patent no US-9722275-B2 discloses nano structuring of a lithium metal anode with oxide particles to form a protective layer on the lithium metal anode, which implies an additional layer of non-active material, hence leading to lower gravimetric energy densities of the resulting secondary battery. In addition, such an oxide layer can also react with the lithium during charging, leading to the formation of an interface layer (solid electrolyte interface (SEI)), which can be intrinsically resistant to lithium-ion transport, hence increasing the overall cell resistance.

In addition several research articles mention the possibility of using a conductive host with lithiophilic coating to enable lithium metal batteries but fail to succeed in reaching current densities comparable to 1C charge corresponding to the state of the art transition metal based cathodes with a respectable cycle life (Chen, X.-R., Li, B.-Q., Zhao, C.-X., Zhang, R., Zhang, Q., Synergetic Coupling of Lithiophilic Sites and Conductive Scaffolds for Dendrite-Free Lithium Metal Anodes. Small Methods 2019, 1900177, https://doi.org/10.1073/pnas.1518188113).

Hence, it is clear that despite significant advances, there still does not exist a specific solution for implementing lithium metal as an anode within secondary energy storage devices. For example, the protective coating implemented on the lithium metal does not provide a long cycling stability or the possibility of fast charging. In addition, although different host structures have been described, like carbon fibres or carbon nanotubes, these are not capable of a long-term stability or high charging rates. Furthermore, most of these solutions have a current limit of 1 mA/cm². In addition, such hosts still require a current collector foil, adding to the weight of dead material within the battery.

A lithium metal anode possesses a high theoretical volumetric capacity of 2061 mAh/cm³, but this corresponds to a fully dense state of lithium metal foil. Upon cycling, lithium starts to form a mossy structure, where it generates voids and imperfections in the lithium metal foil. Ultimately, it lowers the volumetric capacity. In addition, it is quite common to use at least 100% excess of lithium within the batteries. For state-of-the-art cells, lithium can be seen as a "consumable", just as the electrolyte, due to its side reactions. The N/P ratio defines the energy density and cycle life until complete lithium depletion and/or electrolyte dry-out of the cell takes place. The theoretical volumetric capacity of lithium is 2061 mAh/cm³, but available only for the first discharge cycle. To extend the cycle life, an additional 100% excess of Li is needed, to compensate for the side reactions. The reachable volumetric capacity would then be around 1030 mAh/cm³. But this volumetric capacity will be further reduced by the irreversible volumetric fluctuation/defragmentation of lithium, i.e. mossy structure and dead lithium formation. Taking this into consideration, this reduces the volumetric capacity of the lithium metal anode close to the LiC₆ graphite one 747 mAh/cm³, which would imply that the current lithium metal technology has no advantage over the state-of-the-art cells.

Potential Solutions to provide a host lithium metal anode for use in secondary batteries that alleviate the drawbacks as mentioned above have been proposed.

Document US 2020/274155 A1 discloses an anode comprising: a first layer comprising a porous, 3D polymer structure presenting a porosity between 60 and 90%; and a second layer comprising lithium metal, wherein the first layer comprises a polymer, and particles comprise at least one of copper and nickel and are surface coated or doped with at least one of Sn, Zn, Bi, In, Ga, Al, Si, Ge.

Document WO 2021/189083 A1 disclose a battery wherein the anode has a lithiophilic fiber framework with an open porosity of at least 70%, a polymer mat, the fibres having a diameter of less than 0,5 um, further comprising a lithiophilic surface coating deposited thereon consisting of oxides, nitrides, polymers, and ceramics, whereby the group of oxides consists of niobium oxide, AlzO+ZnO, indium oxide, zine oxide, bismuth oxide, magnesium oxide, silicon oxide, gold oxide, iodine oxide, and sulphur oxide.

Document US 2017/352868 A1 discloses an anode for a lithium secondary battery comprising an integral 3D graphene- carbon-metal hybrid foam comprised of multiple pores, pore walls, and a lithium-attracting metal or lithiophilic metal, selected from Au, Ag, Mg, Zn, Ti, Na, K, Al, Fe, Mn, Co, Ni, Sn, V, Cr, ni an amount between 0,1 and 90%.

Document XP087396814 (Yue Chen et al., New Carbon Materials, 01-08-2023, 38(4), 698-724, doi: 10.1016/S1872-5805(23)60734-6) refers to different lithium metal anodes, in particular about silver used as lithiophilic constituent which is coated on different 3D porous supports, like CNF ni [91], a porous carbon framework ni [92] or graphene ni [94].

Document XP086242704 (Yu Ye and al., Journal of Power Sources 472, p 1-9, 16-07-2020, doi: 10.1016/jpowsour.2020.228520) discloses a 3D substrate functioned with Li-Z lithiophilic alloy surface through lithiation of the electrochemically deposited Zn on Cu foam (3D Li-Zn@Cu foam). This substrate can induce uniform Li deposition along the conductive skeleton, effectively reduce the Li nucleation overpotential and suppress L i dendrite formation.

There still is, however, a lot of room for improvement and for a solution that is easy and economically to manufacture and implement.

This object is solved by a self-supported, porous, 3D, flexible host anode, a method for preparing the self-supported, porous, 3D, flexible, host anode, and a secondary battery using the self-supported, porous, 3D, flexible host anode, with the elements as contained in the independent claims, while preferred embodiments are described by the elements of the dependent claims.

What is provided is a self-supported porous 3D flexible host anode for lithium metal secondary batteries, having an open and accessible porosity of at least 70%, and a thickness ranging between 10µm and 100 µm, comprising a non-woven, woven or ordered arrangement of fibres with a diameter ranging between 200 nm and 40 µm, and comprising a primary lithiophilic constituent material exhibiting dendritic morphology along with small amounts of at least two additional lithiophilic materials, wherein the concentration of such additional lithiophilic material is less than 5 atomic weight %, and wherein electrochemical lithiation leads to the formation of intermetallic alloy/alloys leading to a hyper lithiation state, i.e. exceeding the theoretical lithiation capacity of the existing intermetallic phase leading to the coexistence of two phases, ie. intermetallic alloy and lithium metal.

Preferably, the primary dendritic constituent material comprises noble metal grown via a replacement or displacement reaction of less noble metal underneath. More preferably the noble material is silver (Ag), and with the small amounts of secondary lithiophilic constituents comprising palladium (Pd), tin (Sn) and/or magnesium (Mg) .

Even more preferred, the silver (Ag) is provided as a constituent layer comprising dendrites to increase the redox active surface area of the porous host anode for the nucleation and alloying reaction with lithium.

The specific low concentration of secondary lithiophilic heteroatoms/substances on the surface of the porous, 3D, flexible host along with the main lithiophilic dendritic constituent layer is capable of forming sequential intermetallic transition compounds with lithium and/or between themselves, i.e. secondary or tertiary alloys with hyper lithiation, i.e. exceeding the theoretical lithiation capacity of the existing intermetallic phase, which enable fast diffusion of lithium within the electrochemically formed alloys initially, followed by lithium plating on top of the formed intermetallic phase after the solubility limit of the formed alloys at high areal capacities has been reached.

Initially, upon lithiation and subsequent hyper lithiation, the constituent heteroatoms react with lithium to form intermetallic phases with lithium and/or between themselves to form suitable nucleation centres for subsequent lithium deposition during lithium plating with the synergistic, porous, 3D, design of the host enabling uniform dense plating and stripping of lithium at high current densities and areal capacities.

The synergy between the lithiophilic dendritic morphology of silver (Ag) on the 3D host enables high performance of the host described here. The dendritic silver (Ag) layer enhances the interaction area between the plating lithium ions and lithiophilic heteroatoms/substances, thus allowing enhanced active alloying sites along with the low nucleation potential, whereas the 3D porous morphology of the host itself enables a uniform electric field over the host, hence helping with the interaction with the incoming or plating lithium ions, thus, helping in eliminating the so called "lighting Rod effect", and wherein the coating elements have the capability of forming intermetallic alloys with lithium/sodium and/or between themselves within the potential window range of 1.5 V and -0.5 V Vs Li/Li⁺.

The current invention paves way for a high C-rate capable, balanced N/P capacity ratio (with a lithium excess of less than 50%) and a fast charging/discharging lithium metal anode secondary battery with enhanced safety due to alleviation of dendrite issues typically observed within secondary lithium metal anode batteries.

The underlying fibres of the self-supported porous 3D flexible host anode may consist of metallized polymeric fibre, which is stable with organic liquid electrolytes, polymer electrolytes, gel polymer electrolyte or ceramic electrolytes and lithium salts typically used in secondary lithium-metal or lithium-ion batteries, such as polyacrylonitrile (PAN), polypropene (PP), polytetrafluoroethylene (PTFE), polyether ether ketone (PEEK) or polyethersulfone (PES).

Also provided is a method for preparing a self-supported, porous, 3D, host anode for lithium metal secondary batteries, comprising the steps of providing polymeric fibres having a diameter between 200nm and 40µm and being stable with organic liquid electrolytes, polymer electrolytes, gel polymer electrolyte or ceramic electrolytes and lithium salts typically used in secondary lithium-metal or lithium-ion batteries, such as polyacrylonitrile (PAN), polypropene (PP), polytetrafluoroethylene (PTFE), polyether ether ketone (PEEK) or polyethersulfone (PES), forming a non-woven, woven or ordered fabric from the polymeric fibres with a porosity of at least 70% and a thickness between 20 µm and 100µm, metallizing the nonwoven fabric with a coating comprising copper (Cu) via an electroless or electroplating process, followed by coating with small amounts of tin (Sn), palladium (Pd), and/or magnesium (Mg) followed by primary lithiophilic dendritic coating on the fibres by immersing the non-woven fabric in a solution of 0.1 M AgNO₃ for a defined time, preferably 30 minutes, and forming a silver (Ag) dendritic layer on each fibre via a replacement reaction leading to the etching of the copper (Cu) and plating of the silver (Ag) layer, and electrochemically lithiating the non-woven fabric under high current density, preferably between 5 mA/cm² and 6 mA/cm².

This chemical replacement reaction can be given as

*AgNO*₃ + *Cu* → *Ag + CuNO*₃*s*

The step of forming a primary lithiophilic coating preferably comprises forming of silver (Ag) dendrites to increase the surface area of the porous host anode for the nucleation and alloying reaction with lithium and/or with other lithiophilic constituents.

Preferably, the anode is exposed to an externally applied magnetic field for enhanced stripping and plating of lithium at current densities greater than 70 mA/cm² and areal capacities greater than 70 mAh/cm², wherein the magnetic field is applied along the direction of transport of charge carriers, i.e. parallel along the direction of the charge carrier.

What is also provided is a lithium metal secondary battery comprising a porous, 3D, host anode as described, wherein the battery is hosted within a magnetic field for enhanced stripping and plating of lithium at current densities greater than 70 mA/cm⁻² and areal capacities greater than 70 mAh/cm².

The invention described here allows for the possibility of implementing a flexible 3D porous self-standing host for a lithium metal anode with fast charging capability. The host along with the dendritic silver (Ag) and constituent lithiophilic heteroatoms enables uniform and dense plating of lithium at high current density and high areal capacity without observing any dendrite growth or cell short circuit. The host anode described here offers a solution with the possibility to be incorporated with any cell design, i.e. coin cell, pouch cells, prismatic cell and/or cylindrical cells. In addition, it is easily possible to obtain and fabricate the porous, 3D host material along with its metallization and application of the lithiophilic coating. The host anode described here also provides the possibility of removing the usual copper current collector foil, which enhances the gravimetric and volumetric energy density of the cell, wherein the 3D host itself acts as the current collector. In addition, the fast-charging capability beyond the state of the art are well sought after and the host described here inherently provides these capabilities along with an enhanced safety.

The current invention paves way for high C-rate capable, balanced N/P capacity ratio (lithium excess less than 50%) and fast charging/discharging lithium/alkali metal anode secondary batteries with enhanced safety due to alleviation of dendrite issue typically observed within secondary lithium metal anode batteries.

Further elements, features and advantages can be taken from the following discussion of test results with reference to the figures attached hereto, showing:

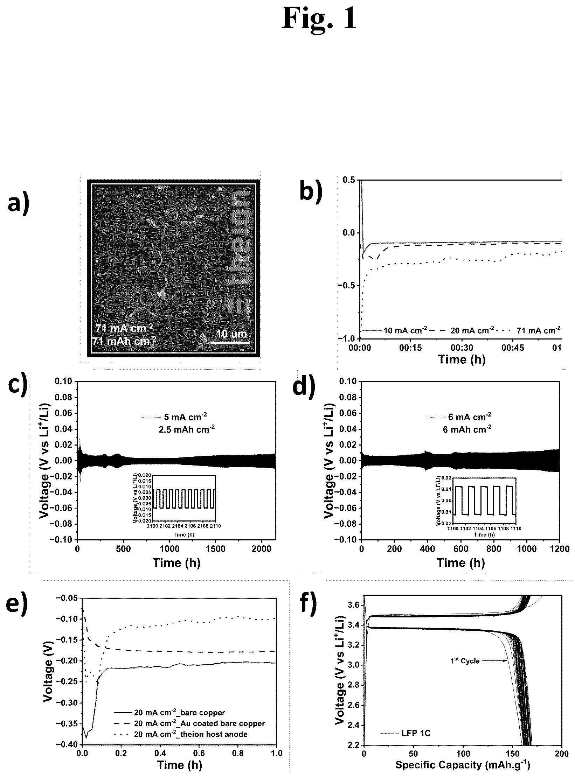

Figure 1a) Morphology of the lithium plated into the self-supported porous 3D flexible host anode at a current density and areal capacity of 71 mA/cm¹ and 71 mAh/cm¹, respectively within an externally applied magnetic field of 10 mT.
Figure 1b) Electrochemical lithium plating curves for the self-supported porous 3D flexible host anode carried out at different current densities under a constant externally applied magnetic field of 10 mT.
Figure 1c) Stripping-plating curves for a symmetrical cell containing a self-supported porous 3D flexible host anode according to the present invention using a current density and areal capacity of 5 mA/cm and 2.5 mAh/cm, respectively, without the externally applied magnetic field.
Figure 1d) Stripping-plating curves for a symmetrical cell containing a self-supported porous 3D flexible host anode according to the present invention using a current density and areal capacity of 6 mA/cm and 6 mAh/cm, respectively, without the externally applied magnetic field.
Figure 1e) Comparison of the lithium plating curves onto the copper current collector, gold coated copper current collector and the self-supported porous 3D flexible host anode according to the present invention carried out at the current density and areal capacity of 20 mA/cm and 20 mAh/cm, respectively, at a constant externally applied magnetic field of 10 mT.
Figure 1f) Galvanostatic charge-discharge curves for a LFP cathode against the 3D pre-lithiated, porous, 3D, self-supporting host anode according to the present invention.

To demonstrate the performance of the host anode described within this invention, symmetrical cells, i.e. cells assembled using two identical electrodes, one previously charged and one discharged, with lithiated host anodes on both sides, were assembled and tested with different current densities and areal capacities.

The host anode consists of a 3D, porous, non-woven fabric with a specific concentration and composition of a thin coating layer according to the invention, to form a lithiophilic surface which, once implemented within a secondary lithium metal battery and in an externally applied magnetic field, allows for lithium plating at high current density and areal capacity, allowing for charging rates of more than 10C, wherein the battery C rating is the measurement of current in which a battery is charged and discharged at. The capacity of a battery is generally rated and labelled at the 1C Rate (1C current). This means a fully charged battery with a capacity of 10Ah should be able to provide 10 Ampere for one hour.

More specifically the porous, 3D, host anode consists of underlying polymeric fibres, with the diameter of the fibres ranging from 200 nm to 40µm, being 35µm for the samples here, and a fibre, such as PAN, PP, PTFE, PEEK or PES, which is stable with organic liquid electrolytes, polymer electrolytes, gel polymer electrolyte or ceramic electrolytes and lithium salts typically used in secondary lithium metal or lithium-ion batteries.

The fibres were then used to form a nonwoven fabric followed by its metallization. The metallized coating comprises mainly copper (Cu) along with possible lithiophilic heteroatoms tin (Sn), palladium (Pd), magnesium (Mg), and others.

In order to coat the material with a primary lithiophilic silver (Ag) coating, the 3D porous host was immersed in a solution of 0.1 M AgNO₃ for exactly 30 minutes to form a silver (Ag) layer on top of each fibre via a replacement reaction leading to the etching of the copper (Cu) and plating of the silver (Ag) layer, comprising silver (Ag) dendrites that are crucial for further increasing the surface area of the porous host for the nucleation and alloying reaction with lithium, see Fig. 1b.

The porous 3D host was then electrochemically lithiated under high current density of 5 mA/cm² and 6 mA/cm². For the electrochemical lithiation at the current density of 5 mA/cm² we demonstrated a plating efficiency, i.e. areal capacity of 40 mAh/cm². Using a higher current density of 10 mA/cm² was found to be unfavourable, since this leads to a short circuit. The results were obtained on the sample with the fibre diameter of 35µm. This can potentially further be improved by reducing the diameter of the fibre and optimizing the density and arrangement of the fibres. The electrochemically lithiated host was found to show planar or 2D growth of lithium.

The experimental data shows that the symmetrical cells cycled at the current density of 5 mA/cm² and 6 mA cm² and areal capacity of 2.5 mAh/cm² and 6/mAh cm², can be cycled for more than 1000 and 500 cycles, see Fig. 1c and d, respectively.

In comparison the symmetrical cells with lithium metal showed severe fading of cycling and high stripping plating over potentials, hence, clearly demonstrating the superior performance of the host described in this invention. In addition, the post-mortem analysis of the host anode after 900 cycles clearly showed the 2D planar plating of the lithium, thus indicating the long-term stability of the host anode described herein.

To further enhance the performance of the 3D, host described herein, symmetrical cells with a lithium 3D porous host were assembled and placed within a 10 mT magnetic field. It was observed that a significant improvement in the plating current density was observed compared to the host anode plated without the magnetic field.

Without the magnetic field, the porous, 3D, host could only sustain 10 mA/cm² current density for 20 mins, however within the magnetic field, plating can easily be extended to 1 hour. In addition, the superior performance within the magnetic field was clearly demonstrated by plating the lithium into the host at a current density of 20, 50 and 70 mA/cm² and an areal capacity of 20, 50 and 70 mAh/cm², respectively, see Fig. 1b.

In addition, it was demonstrated that the host structure plays a crucial role regarding low nucleation potential of lithium plating by comparing three samples, wherein a bare copper foil, a gold (Au) coated copper foil and a 3D, host anode according to the present invention where plated with lithium at a current density of 20 mA/cm² within the magnetic field of 10 mT. It is important to mention that the magnetic field in all the studies was applied parallel and in the direction of the lithium-ion transport. The magnetic field was generated with a Helmholtz coil. The scanning electron microscope micrograph of the 3D porous host plated within the 10 mT magnetic field and at the current density of 53 mA/cm² and 53 mA/cm² is shown in Fig. 1e.

## Claims

1. Self-supported, porous, 3D, flexible host anode for lithium metal secondary batteries, having an open and accessible porosity of at least 70%, and a thickness ranging between 10µm and 100 µm, comprising a non-woven, woven or ordered arrangement of polymeric fibres with a diameter ranging between 200nm and 40µm, and comprising silver (Ag) as a primary lithiophilic constituent material exhibiting dendritic morphology along with small amounts of at least two additional lithiophilic materials such as tin (Sn), palladium (Pd); and/or magnesium (Mg), wherein the concentration of such additional lithiophilic material is less than 5 atomic weight % and wherein electrochemical lithiation leads to the formation of intermetallic alloy/alloys leading to a hyper lithiation state, i.e. exceeding the theoretical lithiation capacity of the existing intermetallic phase, leading to the coexistence of two phases, i.e. intermetallic alloy and lithium metal.

2. Self-supported, porous, 3D, flexible host anode according to claim 1, wherein the silver (Ag) as the primary dendritic constituent material is grown via a replacement or displacement reaction of less noble metal existing underneath.

3. Self-supported, porous, 3D, flexible host anode according to claim 1 or 2, wherein the fibres consist of metallized polymeric fibre, which are stable with organic liquid electrolytes, polymer electrolytes, gel polymer electrolytes or ceramic electrolytes and lithium salts typically used in secondary lithium-metal or lithium-ion batteries, wherein the fibers can be composed of polyacrylonitrile (PAN), polypropene (PP), polytetrafluoroethylene (PTFE), polyether ether ketone (PEEK) or polyethersulfone (PES).

4. Self-supported, porous, 3D, flexible host anode according to any of the preceding claims, wherein the silver (Ag) is provided as a layer comprising 1D, 2D, twinned and/or branched dendrites to increase the surface area of the porous host anode for the nucleation, alloying reaction and subsequent plating of an alkali metal.

5. Method for preparing a self-supported, porous, 3D, flexible host anode for lithium metal secondary batteries, comprising the steps of:
a. providing polymeric fibres having a diameter between 200nm and 40µm and being stable with organic liquid electrolytes, polymer electrolytes, gel polymer electrolyte or ceramic electrolytes and lithium salts typically used in secondary lithium-metal or lithium-ion batteries, such as polyacrylonitrile (PAN), polypropene (PP), polytetrafluoroethylene (PTFE), polyether ether ketone (PEEK) or polyethersulfone (PES);
b. forming a fabric comprising a non-woven, woven or ordered arrangement of the polymeric fibres with a porosity of at least 70% and a thickness between 20µm and 100µm;
c. metallizing the fabric with a coating comprising copper (Cu) and a small concentration of desired lithiophilic material such as tin (Sn), palladium (Pd); and/or magnesium (Mg).
d. forming a primary lithiophilic coating on the fibres by immersing the fabric in a solution of 0.1 M AgNO₃ for a defined time and forming a silver (Ag) layer on each fibre via a replacement reaction leading to the etching of the copper (Cu) and plating/growing of a dendritic silver (Ag) layer on the seeding layer existing underneath; and
e. electrochemically lithiating the fabric under high current density.

6. Method for preparing a self-supported, porous, 3D, flexible host anode according to claim 5 wherein the defined time for immersing the non-woven fabric in a solution of 0.1 M AgNO₃ is 30 minutes.

7. Method for preparing a self-supported, porous, 3D, flexible host anode according to claim 5 or 6, wherein the step of forming a primary lithiophilic coating comprises 1D, 2D, twinned and/or branched silver (Ag) dendrites to increase the surface area of the porous host anode for the nucleation, alloying and plating reaction with alkali metal ion.

8. Method for preparing a self-supported, porous, 3D, flexible host anode according to any of claims 5 to 7, wherein high current density is between 5 mA/cm² and 6 mA/cm².

9. Method for preparing a self-supported, porous, 3D, flexible host anode according to any of claims 5 to 8, wherein the anode is exposed to an externally applied magnetic field for enhanced stripping and plating of lithium at current densities greater than 70 mA/cm² and areal capacities greater than 70 mAh/cm², wherein the magnetic field is applied along with the direction of transport of charge carriers, i.e. parallel along the direction of the charge carrier.

10. Lithium metal secondary battery comprising a self-supported, porous, 3D, flexible host anode according to any of claims 1 to 4 and/or 5 to 9.

11. Lithium metal secondary battery according to claim 10, wherein the battery is exposed to an externally applied magnetic field for enhanced stripping and plating of lithium at current densities greater than 70 mA/cm² and areal capacities greater than 70 mAh/cm², wherein the magnetic field is applied along with the direction of transport of charge carriers, i.e. parallel along the direction of the charge carrier.

## Patentansprüche

1. Selbsttragende, poröse, 3D, flexible Hostanode für Lithium-Metall-Sekundärbatterien mit einer offenen und zugänglichen Porosität von mindestens 70 % und einer Dicke zwischen 10 µm und 100 µm, umfassend eine nicht gewebte, gewebte oder geordnete Anordnung von Polymerfasern mit einem Durchmesser zwischen 200 nm und 40 µm und umfassend Silber (Ag) als primäres lithiophiles Material, das eine dendritische Morphologie aufweist, zusammen mit geringen Mengen von mindestens zwei zusätzlichen lithiophilen Materialien wie Zinn (Sn), Palladium (Pd) und/oder Magnesium (Mg), wobei die Konzentration dieser zusätzlichen lithiophilen Materialien weniger als 5 Atomgewichtsprozent beträgt und wobei die elektrochemische Lithiierung zur Bildung einer intermetallischen Legierung/Legierungen führt, die zu einem Hyper-Lithiierungszustand führt, d.h. der die theoretische Lithiierungskapazität der vorhandenen intermetallischen Phase überschreitet, was zur Koexistenz von zwei Phasen führt, d. h. einer intermetallischen Legierung und Lithiummetall.

2. Selbsttragende, poröse, 3D, flexible Hostanode gemäß Anspruch 1, wobei das Silber (Ag) als primäres dendritisches Konstituenzmaterial durch eine Ersatz- oder Verdrängungsreaktion eines darunter vorhandenen weniger edlen Metalls gezüchtet wird.

3. Selbsttragende, poröse, 3D, flexible Hostanode gemäß Anspruch 1 oder 2, wobei die Fasern aus metallisierten Polymerfasern bestehen, die mit organischen flüssigen Elektrolyten, Polymerelektrolyten, Gelpolymerelektrolyten oder Keramikelektrolyten und Lithiumsalzen, die typischerweise in sekundären Lithium-Metall- oder Lithium-Ionen-Batterien verwendet werden, stabil sind, wobei die Fasern aus Polyacrylnitril (PAN), Polypropen (PP), Polytetrafluorethylen (PTFE), Polyetheretherketon (PEEK) oder Polyethersulfon (PES) bestehen können.

4. Selbsttragende, poröse, 3D, flexible Hostanode gemäß einem der vorstehenden Ansprüche, wobei das Silber (Ag) als eine Schicht bereitgestellt ist, die 1D-, 2D-, verzwillingte und/oder verzweigte Dendriten umfasst, um die Oberfläche der porösen Hostanode für die Keimbildung, die Legierungsreaktion und die anschließende Plattierung eines Alkalimetalls zu vergrößern.

5. Verfahren zur Herstellung einer selbsttragenden, porösen, 3D, flexiblen Hostanode für Lithium-Metall-Sekundärbatterien, umfassend die folgenden Schritte:
a. Bereitstellen von Polymerfasern mit einem Durchmesser zwischen 200 nm und 40 µm, die mit organischen Flüssigelektrolyten, Polymerelektrolyten, Gelpolymerelektrolyten oder Keramikelektrolyten und Lithiumsalzen, die typischerweise in Sekundärbatterien aus Lithiummetall oder Lithiumionen verwendet werden, stabil sind, wie beispielsweise Polyacrylnitril (PAN), Polypropen (PP), Polytetrafluorethylen (PTFE), Polyetheretherketon (PEEK) oder Polyethersulfon (PES);
b. Bilden eines Gewebes, das eine nicht gewebte, gewebte oder geordnete Anordnung der Polymerfasern mit einer Porosität von mindestens 70 % und einer Dicke zwischen 20 µm und 100 µm umfasst;
c. Metallisieren des Gewebes mit einer Beschichtung, die Kupfer (Cu) und eine geringe Konzentration eines gewünschten lithiophilen Materials wie Zinn (Sn), Palladium (Pd) und/oder Magnesium (Mg) enthält
d. Bilden einer primären lithiophilen Beschichtung auf den Fasern durch Eintauchen des Gewebes in eine Lösung von 0,1 M AgNO₃ für eine definierte Zeit und Bilden einer Silberschicht (Ag) auf jeder Faser durch eine Substitutionsreaktion, die zum Ätzen des Kupfers (Cu) und zum Plattieren/Wachsen einer dendritischen Silberschicht (Ag) auf der darunter liegenden Keimschicht führt ; und
e. elektrochemisches Lithiieren des Gewebes unter hoher Stromdichte.

6. Verfahren zur Herstellung einer selbsttragenden, porösen, 3D, flexiblen Hostanode gemäß Anspruch 5, wobei die definierte Zeit für das Eintauchen des nicht gewebten Gewebes in eine Lösung von 0,1 M AgNO₃ 30 Minuten beträgt.

7. Verfahren zur Herstellung einer selbsttragenden, porösen, 3D, flexiblen Hostanode gemäß Anspruch 5 oder 6, wobei der Schritt des Bildens einer primären lithiophilen Beschichtung 1D, 2D, verzwillingte und/oder verzweigte Silber (Ag)-Dendriten umfasst, um die Oberfläche der porösen Hostanode für die Keimbildung, Legierung und Plattierungsreaktion mit Alkalimetallionen zu vergrößern.

8. Verfahren zur Herstellung einer selbsttragenden, porösen, 3D, flexiblen Hostanode gemäß einem der Ansprüche 5 bis 7, wobei die hohe Stromdichte zwischen 5 mA/cm² und 6 mA/cm² liegt.

9. Verfahren zur Herstellung einer selbsttragenden, porösen, 3D, flexiblen Hostanode gemäß einem der Ansprüche 5 bis 8, wobei die Anode einem extern angelegten Magnetfeld ausgesetzt wird, zum verbesserten Abstreifen und Abscheiden von Lithium bei Stromdichten von mehr als 70 mA/cm² und Flächenkapazitäten von mehr als 70 mAh/cm², wobei das Magnetfeld entlang der Transportrichtung der Ladungsträger, d. h. parallel zur Richtung der Ladungsträger, angelegt wird.

10. Lithium-Metall-Sekundärbatterie, die eine selbsttragende, poröse, 3D, flexible Hostanode gemäß einem der Ansprüche 1 bis 4 und/oder 5 bis 9 umfasst.

11. Lithium-Metall-Sekundärbatterie gemäß Anspruch 10, wobei die Batterie einem extern angelegten Magnetfeld ausgesetzt wird, zum verbesserten Abstreifen und Plattieren von Lithium bei Stromdichten von mehr als 70 mA/cm² und Flächenkapazitäten von mehr als 70 mAh/cm², wobei das Magnetfeld entlang der Transportrichtung der Ladungsträger, d. h. parallel zur Richtung der Ladungsträger, angelegt wird.

## Revendications

1. Anode hôte poreuse, tridimensionnelle, flexible et autoporteuse destinée à des accumulateurs secondaires au lithium métallique, présentant une porosité ouverte et accessible d'au moins 70 %, et une épaisseur dans la plage comprise entre 10 µm et 100 µm, comprenant une organisation non-tissée, tissée, ou ordonnée de fibres polymériques présentant un diamètre dans une plage comprise entre 200 nm et 40 µm, et comprenant de l'argent (Ag) en tant que matériau primaire constitutif lithiophile exhibant une morphologie dendritique, ainsi que de petites quantités d'au moins deux matériaux lithiophiles supplémentaires tels que de l'étain (Sn), du palladium (Pd) ; et/ou du magnésium (Mg), selon laquelle la teneur en de tels matériaux lithiophiles supplémentaires est inférieure à 5 % en poids atomique et selon laquelle la lithiation électrochimique conduit à la formation d'un alliage ou d'alliages intermétalliques conduisant à un état d'hyperlithiation, c-à-d, dépassant la capacité théorique de lithiation de la phase intermétallique existante, conduisant à la coexistence de deux phases, c-à-d, d'alliage intermétallique et du lithium métallique.

2. Anode hôte poreuse, tridimensionnelle, flexible et autoporteuse selon la revendication 1, selon laquelle l'argent (Ag) en tant que matériau constitutif primaire dendritique est obtenu par croissance à réaction de remplacement ou de déplacement d'un métal moins noble présent en dessous.

3. Anode hôte poreuse, tridimensionnelle, flexible et autoporteuse selon la revendication 1 ou la revendication 2, selon laquelle les fibres consistent en de la fibre polymérique métallisée, qui est stable dans des électrolytes liquides organiques, des électrolytes à base de polymère, des électrolytes à base de polymère sous forme de gel ou des électrolytes céramiques et des sels de lithium typiquement utilisés dans des accumulateurs secondaires au lithium métallique ou aux ions de lithium, selon laquelle les fibres peuvent être constituées de polyacrylonitrile (PAN), polypropylène (PP), polytétrafluoroéthylène (PTFE), polyétheréthercétone (PEEK) ou polyéthersulfone (PES).

4. Anode hôte poreuse, tridimensionnelle, flexible et autoporteuse selon l'une quelconque des revendications précédentes, selon laquelle l'argent (Ag) est prévu sous forme de couche comprenant des dendrites 1D, 2D, jumelées et/ou ramifiées afin d'augmenter la zone surfacique de l'anode hôte poreuse pour les besoins des réactions de nucléation, d'alliage et de plaquage ultérieur d'un métal alcalin.

5. Procédé de préparation d'une anode hôte poreuse, tridimensionnelle, flexible et autoporteuse destinée aux accumulateurs secondaires au lithium métallique, comprenant les étapes de :
a. mise à disposition de fibres polymériques présentant un diamètre compris entre 200 nm et 40 µm et étant stables dans des électrolytes liquides organiques, des électrolytes à base de polymère, des électrolytes à base de polymère sous forme de gel ou des électrolytes céramiques et des sels de lithium typiquement utilisés dans des accumulateurs secondaires au lithium métallique ou aux ions de lithium, tels que le polyacrylonitrile (PAN), le polypropylène (PP), le polytétrafluoroéthylène (PTFE), le polyétheréthercétone (PEEK) ou le polyéthersulfone (PES) ;
b. formation d'un tissu comprenant une organisation non-tissée, tissée, ou ordonnée des fibres polymériques présentant une porosité d'au moins 70 % et une épaisseur comprise entre 20 µm et 100 µm ;
c. métallisation du tissu via un revêtement comprenant du cuivre (Cu) et une petite concentration de matériau lithiophile souhaitée tel que de l'étain (Sn), du palladium (Pd) ; et/ou du magnésium (Mg) ;
d. formation d'un revêtement lithiophile primaire sur les fibres par le biais d'une immersion du tissu dans une solution de 0,1 M AgNO₃ pendant un laps de temps défini et la formation d'une couche d'argent (Ag) sur chaque fibre via une réaction de remplacement conduisant à une gravure du cuivre (Cu) et le plaquage ou la croissance d'une couche d'argent (Ag) dendritique sur la couche d'ensemencement existant en dessous ; et
e. lithiation électrochimique du tissu sous application d'une densité de courant élevée.

6. Procédé de préparation d'une anode hôte poreuse, tridimensionnelle, flexible et autoporteuse selon la revendication 5, selon lequel le laps de temps défini d'immersion du tissu non-tissé dans une solution de 0,1 M AgNO₃ est de 30 minutes.

7. Procédé de préparation d'une anode hôte poreuse, tridimensionnelle, flexible et autoporteuse selon la revendication 5 ou la revendication 6, selon lequel l'étape de formation d'un revêtement lithiophile primaire comprend des dendrites 1D, 2D, jumelées et/ou ramifiées d'argent (Ag) afin d'augmenter la zone surfacique de l'anode hôte poreuse pour les besoins des réactions de nucléation, alliage, et plaquage avec des ions de métal alcalin.

8. Procédé de préparation d'une anode hôte poreuse, tridimensionnelle, flexible et autoporteuse selon l'une quelconque des revendications 5 à 7, selon lequel un courant à densité élevée se situe entre 5 mA/cm² et 6 mA/cm².

9. Procédé de préparation d'une anode hôte poreuse, tridimensionnelle, flexible et autoporteuse selon l'une quelconque des revendications 5 à 8, selon lequel l'anode est exposée à un champ magnétique d'application externe afin d'augmenter l'enlèvement et le plaquage du lithium à des densités de courant supérieures à 70 mA/cm² et des capacités surfaciques supérieures à 70 mAh/cm², selon lequel le champ magnétique est appliqué selon la même direction que celle du transport des porteurs de charge, c-à-d, en parallèle de la direction de transport du porteur de charge.

10. Accumulateur secondaire au lithium métallique comprenant une anode hôte poreuse, tridimensionnelle, flexible et autoporteuse selon l'une quelconque des revendications 1 à 4 et/ou 5 à 9.

11. Accumulateur secondaire au lithium métallique selon la revendication 10, selon lequel l'accumulateur est exposé à un champ magnétique d'application externe afin d'augmenter l'enlèvement et le plaquage du lithium à des densités de courant supérieures à 70 mA/cm² et des capacités surfaciques supérieures à 70 mAh/cm², selon lequel le champ magnétique est appliqué selon la même direction que celle du transport des porteurs de charge, c-à-d, en parallèle de la direction de transport du porteur de charge.
